# EUROPEAN PATENT SPECIFICATION

(11) **EP 1 868 795 B1**
(45) Date of publication and mention of the grant of the patent: **03.05.2017**
(21) Application number: 06769783.9
(22) Date of filing: 16.03.2006
(51) Int. Cl.: B29C 70/08, B29C 70/20, B29C 70/22, B29C 70/24, B29L 31/30, B64C 1/00

(54) **MULTI-AXIAL LAMINATE COMPOSITE STRUCTURES**
MEHRACHSIGE LAMINATVERBUNDSTRUKTUREN
STRUCTURES COMPOSITES STRATIFIEES MULTI-AXIALES

(30) Priority: 31.03.2005 US 96727
(43) Date of publication of application: 26.12.2007
(73) Proprietor: The Boeing Company, Chicago, IL 60606-1596 (US)
(72) Inventor: KISMARTON, Max, U., Renton, WA 98058 (US)
(74) Representative: Witte, Weller & Partner Patentanwälte mbB
(86) International application number: PCT/US2006/009730
(87) International publication number: WO 2006/121505

(56) References cited:
- EP-A- 0 433 686
- EP-A- 1 174 533
- DE-U1-202004 007 601
- FR-A- 2 660 892
- US-A- 4 368 234
- US-A1- 2003 148 082

## Description

This invention relates generally to composite structures and, more specifically, to multi-axial laminate composite structures.

A composite laminate structure and a method of fabrication such a composite structure are known from FR-A-2660892. From this prior art document a chassis for a beach sailing car is known that comprises a plurality of unidirectional fiber layers and of bidirectional fiber layers that are integrated into a composite structure with a suitable resin. There may be several unidirectional layers and several bidirectional layers. The bidirectional layers may extend at ± 45 degrees with respect to the unidirectional layers or at an angle between 30 and 45 degrees.

US 4,368,234 A discloses a woven material and layered assembly thereof.

While this structure may be suitable for a chassis for a beach windsurfer, the structure still may suffer from some drawbacks found in the prior art. Namely, the strength may not be sufficient under specific load conditions. Also the weight caused by a greater number of layers may be too heavy.

Fiber reinforced laminate composites are widely used in weight sensitive products such as aircraft and space vehicles, since they generally exhibit favorable strength-to-weight ratios. For example, fiber reinforced laminate composites may be used to form various aircraft components, such as aircraft skins and fairings, as well as selected load-bearing structures. Typically, laminate composite structures are produced by methods such as "laying up". Laying up is a known assembly method wherein a plurality of fiber reinforcement layers are successively applied to form the structure. In general, the fiber layers are oriented in predetermined directions to impart strength to the structure in one or more selected directions. The fiber layers may be applied to the structure using individual reinforcement filaments, fiber reinforcement tapes, stitching and other known methods. When fiber tapes are used, for example, alternate layers of fiber tape may be laid in various selected directions to produce the structure.

The direction of the fibers within the layers and the number of layers included in the composite generally depends upon the intended use of the composite. In known composite materials, the layers in the composite are arranged in a "balanced" orientation, so that a first layer is positioned with the fibers oriented in a selected direction, while a second layer is positioned so that the fibers in the second layer are oriented substantially perpendicular to the selected direction. Other intermediate layers are generally present. In one intermediate layer, the reinforcement fibers are oriented in a 45-degree orientation relative to the selected direction, while in another adjacent intermediate layer the reinforcement fibers are oriented in a -45 degree orientation relative to the selected direction.

Fiber reinforced composite structures formed in the foregoing manner (*i.e*. having a 0/±45/90 degree layer configuration) may exhibit insufficient strength unless a significant number of layers are used, which generally adds a significant amount of weight to the structure. Moreover, the foregoing orientations (*e.g*. 0/±45/90) in the composite structure generally include seams and potential areas of weakness, which may allow cracks to propagate through the structure, thus limiting the permissible operating stresses of the structure. Further, when fiber tapes are used in the lay up process, the fibers in the fiber tape must generally be larger and heavier fibers so that the structure has sufficient strength.

Therefore, there exists a need for a fiber reinforced composite structures that provide favorable weight advantages and enhanced strength.

In view of this, it is an object of the invention to disclose an improved composite laminate structure overcoming the drawbacks seen in the prior art. In particular, the composite laminate structure shall have an increased strength and favorable weight advantages.

This object is achieved by a multi-axial composite laminate structure according to claim 1.

### SUMMARY

The various embodiments of the present invention are directed to laminate composite structures.

In one aspect, a composite laminate structure includes a first bidirectional layer having a first portion that includes a plurality of parallel reinforcement fibers oriented at a first selected angle relative to a first selected direction and a second adjacent portion that includes approximately parallel reinforcement fibers oriented at a second selected angle relative to the first direction. The structure further includes a second bidirectional layer having a first portion that includes a plurality of parallel reinforcement fibers oriented at a third selected angle relative to the first selected direction and a second adjacent portion that includes approximately parallel reinforcement fibers oriented at a fourth selected angle relative to the first direction, and at least one unidirectional layer having a plurality of parallel reinforcement fibers and coupled to at least one of the first bidirectional layer and the second bidirectional layer.

### BRIEF DESCRIPTION OF THE DRAWINGS

The various embodiments of the present invention are described in detail below with reference to the following drawings.
FIGURE 1 is a partial exploded isometric view of a multi-axial composite laminate structure according to an embodiment of the invention;
FIGURE 2 is a table that shows orientation angles for the first intermediate layer, the second intermediate layer, the third intermediate layer and the fourth intermediate layer of FIGURE 1, according to another embodiment of the invention;
FIGURE 3 is an exploded partial isometric view of a multi-axial composite laminate structure;
FIGURE 4 is a block diagrammatic view of a method of forming a multi-axial composite laminate structure; and
FIGURE 5 is a side elevation view of an aircraft having one or more of the disclosed embodiments of the present invention is shown.

### DETAILED DESCRIPTION

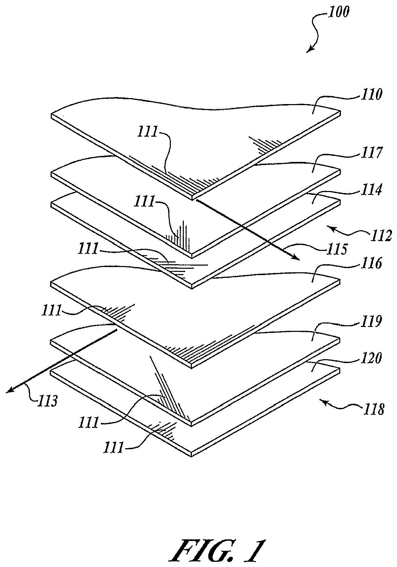

The present invention relates to multi-axial laminate composite structures. Many specific details of certain embodiments of the invention are set forth in the following description and in FIGURES 1 through 5 to provide a thorough understanding of such embodiments. One skilled in the art, however, will understand that the present invention may have additional embodiments, or that the present invention may be practiced without several of the details described in the following description.

FIGURE 1 is a partial exploded isometric view of a multi-axial composite laminate structure 100 according to an embodiment of the invention. The multi-axial composite laminate structure 100 includes a first unidirectional layer 116 and a second unidirectional layer 110. The first unidirectional layer 116 includes a plurality of reinforcement fibers 111 that are approximately parallel and aligned with a first selected direction 113. The second unidirectional layer 110 also includes a plurality of reinforcement fibers 111, which are approximately parallel and aligned with a second selected direction 115. The first selected direction 113 and/or the second selected direction 115 may be selected based upon an anticipated loading condition. For example, one of the first and second selected directions 113 and 115, respectively, may be aligned with the direction of a principal stress that results from the anticipated loading condition. In a particular embodiment, however, the first selected direction 113 and the second selected direction 115 are approximately perpendicular.

The structure 100 also includes a first bidirectional layer 112 positioned on one side of the first unidirectional layer 116, and a second bidirectional layer 120 that is positioned on an opposing side of the first unidirectional layer 116. The first bidirectional layer 112 includes a first planar portion 117 having a plurality of approximately parallel reinforcement fibers 111 oriented at an angle α relative to a first direction 113, and a second planar portion 114 having a plurality of approximately parallel reinforcement fibers 111 oriented at an angle -α relative to the first direction 113. The angles α and -α are shallow angles within a range of approximately about zero degrees and approximately about 20 degrees. The second bidirectional layer 118 includes a first planar portion 119 having a plurality of approximately parallel reinforcement fibers 111 oriented at an angle β relative to a first direction 113, and a second planar portion 120 having a plurality of approximately parallel reinforcement fibers 111 oriented at an angle -β relative to the first direction 113. The angles β and -β are broad angles having a magnitude generally greater than the shallow angles. The broad angles β and -β therefore have magnitudes that range between approximately about 45 degrees and approximately about 90 degrees.

Still referring to FIGURE 1, the first unidirectional layer 116, the second unidirectional layer 110 and the respective first and second planar portions of the first bidirectional layer 112 and the second bidirectional layer 120 may be formed from a relatively wide fiber tape (not shown in FIGURE 1) that includes the reinforcement fibers 111. The fiber tape may include parallel tows, each made of a substantially equal number of fiber reinforcement filaments. In one particular embodiment, the fiber tows are retained within the fiber tape by impregnating the tape with a suitable resin in an uncured state.

In other particular embodiments, the reinforcement fibers 111 may include carbon fibers, such as graphite fibers having a relatively high modulus of elasticity. In still other embodiments of the invention, the first bidirectional layer 112 may have a first thickness and the second bidirectional layer 120 may have a second thickness that is different from the first thickness. Still further, the first unidirectional layer 116 and the second unidirectional layer 110 may have substantially equivalent thicknesses, or, alternatively, the first unidirectional layer 116 and the second unidirectional layer 110 be layers having dissimilar thicknesses.

The multi-axial composite laminate structure 100 may include a plurality of first unidirectional layers 116 and a plurality of the second unidirectional layers 110. Additionally, the structure 100 may also include a plurality of the first bidirectional layers 112 and a plurality of the second bidirectional layers 118. The first unidirectional layers 116, second unidirectional layers 110, and the first bidirectional layers 112 and the second bidirectional layers 118 may be included in any desired proportion within the structure 100. In one specific embodiment, however, the structure 100 includes at least about 60 % of the first bidirectional layer 112. In another specific embodiment, the structure 100 includes approximately about 80% of the first bidirectional layer 112. Accordingly, the structure 100 includes predominately layers having the fibers oriented at the shallow angle.

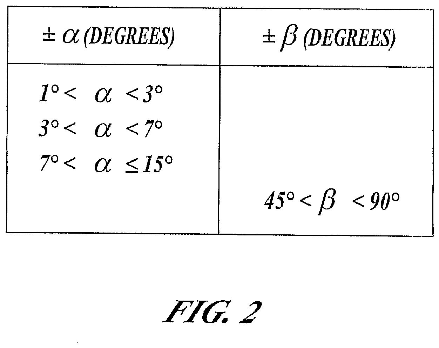

FIGURE 2 is a table 200 that shows orientation angles α and β for the first bidirectional layer 112 and the second bidirectional layer 118 of FIGURE 1, according to another embodiment of the invention. The first and second columns of the table 200 show selected angular ranges (in degrees) for the angles α and β, respectively. In one particular embodiment, the angle α may be within the range of approximately about one degree and approximately about three degrees. In another particular embodiment, the angle α may be within the range of approximately about three degrees and approximately about seven degrees. In still another particular embodiment, the angle α may be within the range of approximately about seven degrees and approximately about 15 degrees.

Still referring to FIGURE 2, and in another particular embodiment, the angle β may be within the range of approximately about 45 degrees and approximately about ninety degrees.

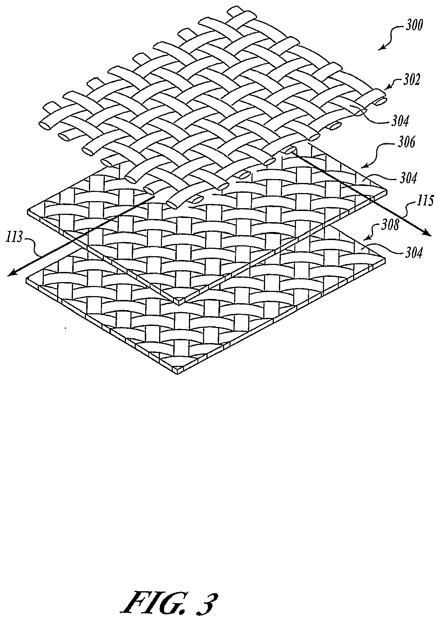

FIGURE 3 is an exploded partial isometric view of a multi-axial composite laminate structure 300. The multi-axial composite laminate structure 300 includes a first layer 302 having a plurality of interwoven reinforcement fibers 304. A first selected portion of the reinforcement fibers 304 in the first layer 302 are oriented in the first selected direction 113, and a second selected portion of the reinforcement fibers 304 are oriented in the second selected direction 115. The first selected direction 113 is perpendicular to the second selected direction 115.

The structure 300 also includes a second layer 306 also having a plurality of interwoven reinforcement fibers 304. Again a first selected portion of the reinforcement fibers 304 in the second layer 306 are oriented at an angle α relative to the first selected direction 113, and a second selected portion of the reinforcement fibers 304 that are oriented at an angle -α relative to the second selected direction 115. Representative values for the angle α are shown in FIGURE 2. A third layer 308 includes a plurality of the interwoven reinforcement fibers 304. A first selected portion of the reinforcement fibers 304 in the third layer 308 are oriented at an angle β relative to the first selected direction 113, and a second selected portion of the reinforcement fibers 304 that are oriented at an angle -β relative to the second selected direction 115. Again, representative values for the angle β are shown in FIGURE 2. The first layer 302, the second layer 306 and the third layer 308 are mutually bonded together by applying a suitable resin material to the layers 302, 306 and 308 and curing the resin material to form a unitary assembly. Z-stitching (not shown in FIGURE 2) may also be used to attach the layers 302, 306 and 308. Briefly, and in general terms, Z-stitching joins the layers 302, 306 and 308 by repetitively projecting one or more stitching fibers through the layers 302, 306 and 308 so that the respective layers 302, 306 and 308 are "stitched" together. Although the first selected portion of the interwoven reinforcement fibers 304 of the first layer 302 are approximately aligned with the first selected direction 113, and the second selected portion of the fibers 304 are approximately aligned with the second selected direction, other embodiments are possible. For example, the first selected portion of the fibers 304 may be approximately aligned with the first selected direction113, while the second portion of the fibers 304 are oriented at an angle α or an angle β (as shown in FIGURE 2) with respect to the first selected direction. In still another particular embodiment, the first selected portion of the fibers 304 in the second layer 306 or the third layer 308 may be oriented at an angle α relative to the first selected direction 113, while the second selected portion of the reinforcement fibers 304 are oriented at an angle β relative to the first selected direction 113.

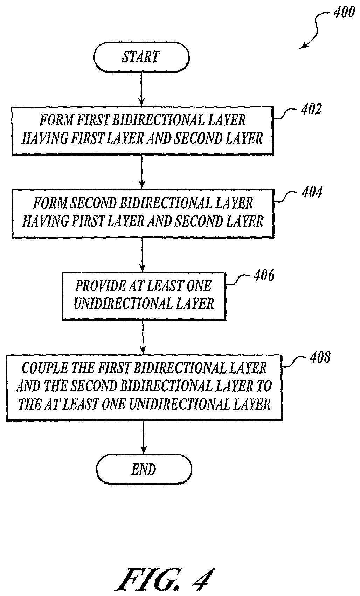

FIGURE 4 is a block diagrammatic view of a method 400 of forming a multi- axial composite laminate structure. At block 402, a first bidirectional layer is formed by coupling a first reinforcement layer having a plurality of approximately parallel reinforcement fibers to a second reinforcement layer also having a plurality of approximately parallel reinforcement fibers. The reinforcement fibers in the first reinforcement layer and the reinforcement fibers in the second reinforcement layers are oriented with reference to a selected direction. Accordingly, the reinforcement fibers in the first reinforcement layer and the second reinforcement are oriented according to the angles α and β as shown in FIGURE 2. For example, the fibers in the first reinforcement layer may be oriented at an angle α relative to a selected direction, while the fibers in the second reinforcement layer may be oriented at an angle - α relative to the selected direction. Alternately, the fibers in the first reinforcement layer and the second reinforcement layer may be oriented at other angles, as earlier described.

At block 404, a second bidirectional layer is formed by coupling a first reinforcement layer having a plurality of approximately parallel reinforcement fibers to a second reinforcement layer also having a plurality of approximately parallel reinforcement fibers. The reinforcement fibers in the first reinforcement layer and the reinforcement fibers in the second reinforcement layers are oriented with reference to the selected direction.

At block 406, at least one unidirectional layer is positioned relative to the first bidirectional layer and the second bidirectional layer. The at least one unidirectional layer may be aligned with the selected direction. At block 408, the first directional layer, the second directional layer and the at least one unidirectional layer are coupled. In one embodiment, a suitable resin is applied to the first directional layer, the second directional layer and the at least one unidirectional layer and cured to form a unitary assembly.

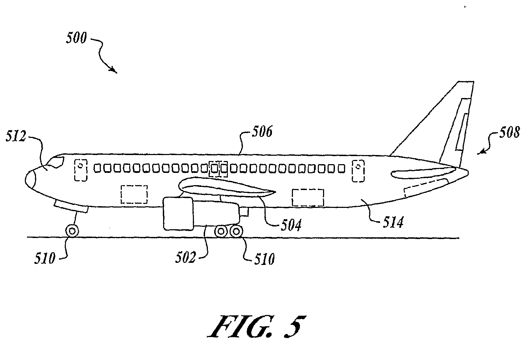

Those skilled in the art will also readily recognize that the foregoing embodiments may be incorporated into a wide variety of different systems. Referring now in particular to FIGURE 5, a side elevation view of an aircraft 500 having one or more of the disclosed embodiments of the present invention is shown. With the exception of the embodiments according to the present invention, the aircraft 500 includes components and subsystems generally known in the pertinent art, and in the interest of brevity, will not be described further. The aircraft 500 generally includes one or more propulsion units 502 that are coupled to wing assemblies 504, or alternately, to a fuselage 506 or even other portions of the aircraft 500. Additionally, the aircraft 500 also includes a tail assembly 508 and a landing assembly 510 coupled to the fuselage 506. Accordingly, the aircraft 500 is generally representative of a commercial passenger aircraft, which may include, for example, the 737, 747, 757, 767 and 777 commercial passenger aircraft available from The Boeing Company of Chicago, IL. Although the aircraft 500 shown in FIGURE 5 generally shows a commercial passenger aircraft, it is understood that the various embodiments of the present invention may also be incorporated into flight vehicles of other types. Examples of such flight vehicles may include manned or even unmanned military aircraft, rotary wing aircraft, or even ballistic flight vehicles, as illustrated more fully in various descriptive volumes, such as Jane's AU The World's Aircraft, available from Jane's Information Group, Ltd. of Coulsdon, Surrey, UK.

With reference still to FIGURE 5, the aircraft 500 may include one or more of the embodiments of the multi-axial laminate composite structures 514 according to the present invention, which may be incorporated into load bearing and/or non-load bearing portions of the aircraft 500. Although the foregoing embodiments of the invention relate specifically to aircraft structures, it is understood that the foregoing embodiments may be also be incorporated into other types of vehicles, including various forms of terrestrial vehicles such as ground and marine vehicles, which may utilize the various embodiments of the present invention without significant modification.

Embodiments of the present invention may provide significant advantages over prior art laminate composites. For example, embodiments of the present invention may provide substantial weight savings, thereby reducing operating costs, such as fuel consumption. In addition, the foregoing embodiments advantageously reduce the complexity of composite structures, and reduce raw materials usage and cycle time. Embodiments of the present invention also advantageously reduce damage propagation across adjacent laminate surfaces and generally increase the specific strength and stiffness of the composite structure.

While preferred and alternate embodiments of the invention have been illustrated and described, as noted above, many changes can be made without departing from the scope of the invention as defined in the appended claims.

Accordingly, the scope of the invention is not limited by the disclosure of these preferred and alternate embodiments. Instead, the invention should be determined entirely by reference to the claims that follow.

## Claims

1. A multi axial composite laminate structure (100), comprising:
a first unidirectional layer (116) including a plurality of parallel reinforcement fibers (111) which are aligned with a first selected direction (113), the first selected direction being aligned with a direction of principal stress;
a second unidirectional layer (110) including a plurality of parallel reinforcement fibers (111) which are aligned with a second selected direction (115), wherein the first selected direction (113) and the second selected direction (115) are perpendicular;
a first bidirectional layer (112) positioned on one side of the first unidirectional layer (116) having a first planar portion (117) that includes a plurality of parallel reinforcement fibers (111) oriented at a first selected shallow angle α relative to a first selected direction (113) and a second adjacent planar portion (114) that includes approximately parallel reinforcement fibers (111) oriented at a second selected shallow angle -α relative to the first direction (113); and
a second bidirectional layer (118) positioned on an opposing side of the first unidirectional layer (116) having a first planar portion (119) that includes a plurality of parallel reinforcement fibers (111) oriented at a third selected broad angle β relative to the first selected direction (113) and a second adjacent planar portion (120) that includes approximately parallel reinforcement fibers (111) oriented at a fourth selected broad angle -β relative to the first direction (113),
wherein one of the following applies for the angle α: 1°<α<3°, 3°<α<7°, 7<α≤15°, and for the angle β the following is valid 45°<β<90°.

2. The multi-axial composite laminate structure of claim 1, further comprising at least one of the unidirectional layers (116, 117) being coupled to at least one of the first bidirectional layer (112) and the second bidirectional layer (118).

3. The multi-axial composite laminate structure (100) of claim 2, wherein the first unidirectional layer (116) is interposed between the first bidirectional layer (112) and the second bidirectional layer (118).

4. The multi-axial composite laminate structure (100) of claim 1, wherein at least one of the respective first and second portions (117, 114) of the first bidirectional layer (112), and the respective first and second portions (119, 120) of the second bidirectional layer (118) comprises a woven bidirectional layer.

5. The multi-axial composite laminate structure (100) of claim 2, wherein at least one of the unidirectional layers further comprises a first unidirectional layer having a plurality of reinforcement fibers oriented in the first selected direction and a second unidirectional layer having a plurality of parallel reinforcement fibers oriented in a second selected direction, the first selected direction being approximately perpendicular to the first selected direction.

6. The multi-axial composite laminate structure (100) of claim 5, wherein the first unidirectional layer (116) and the second unidirectional layer (110) further comprise a woven reinforcement layer.

7. The multi-axial composite laminate structure (100) of claim 1, wherein the first bidirectional layer (112) comprises at least about 60 percent of a volume of the structure (100).

8. The multi-axial composite laminate structure (100) of claim 1, wherein the first bidirectional layer (112) comprises 80 percent of a volume of the structure.

9. An aerospace vehicle, comprising:
a fuselage;
wing assemblies and an empennage operatively coupled to the fuselage; and
a multi-axial composite laminate structure (100) according to one of the preceeding claims, which structure (100) is incorporated into a selected portion of at least one of the fuselage, the wing assemblies and the empennage.

## Patentansprüche

1. Mehrachsige Verbundlaminatstruktur (100), die aufweist:
eine erste unidirektionale Schicht (116), die eine Vielzahl paralleler Verstärkungs-fasern (111) aufweist, die mit einer ersten ausgewählten Richtung (113) ausgerichtet sind, wobei die erste ausgewählte Richtung mit einer Richtung einer Grundspannung ausgerichtet ist;
eine zweite unidirektionale Schicht (110), die eine Vielzahl paralleler Verstärkungs-fasern (111) umfasst, die mit einer zweiten ausgewählten Richtung (115) ausgerichtet sind, wobei die erste ausgewählte Richtung (113) und die zweite ausgewählte Richtung (115) senkrecht zueinander sind;
eine erste bidirektionale Schicht (112), die auf einer Seite der ersten unidirektionalen Schicht (116) mit einem ersten ebenen Abschnitt (117), der eine Vielzahl paralleler Verstärkungsfasern (111) aufweist, die in einem ersten ausgewählten flachen Winkel α relativ zur ersten ausgewählten Richtung (113) ausgerichtet sind, und mit einem zweiten benachbarten ebenen Abschnitt (114) positioniert ist, der annähernd parallele Verstärkungsfasern (111) umfasst, die in einem zweiten ausgewählten flachen Winkel -α relativ zur ersten Richtung (113) ausgerichtet sind; und
eine zweite bidirektionale Schicht (118), die auf einer gegenüberliegenden Seite der ersten unidirektionalen Schicht (116) mit einem ersten ebenen Abschnitt (119), der eine Vielzahl paralleler Verstärkungsfasern (111) umfasst, die in einem dritten ausgewählten breiten Winkel β relativ zur ersten ausgewählten Richtung (113) orientiert sind, und mit einem zweiten benachbarten ebenen Abschnitt (120) positioniert ist, der annähernd parallele Verstärkungsfasern (111) umfasst, die in einem vierten ausgewählten breiten Winkel -β relativ zur ersten Richtung (113) orientiert sind,
wobei das Folgende für den Winkel α gilt: 1°<α<3°, 3°<α<7° oder 7<α≤15°, und wobei für den Winkel β das Folgende 45°<β<90° gültig ist.

2. Mehrachsige Verbundlaminatstruktur nach Anspruch 1, die des Weiteren zumindest eine der unidirektionalen Schichten (116, 177) aufweist, die an die erste bidirektionale Schicht (112) und/oder die zweite bidirektionale Schicht (118) gekoppelt ist bzw. sind.

3. Mehrachsige Verbundlaminatstruktur (100) nach Anspruch 2, wobei die erste unidirektionale Schicht (116) zwischen der ersten bidirektionalen Schicht (112) und der zweiten bidirektionalen Schicht (118) angeordnet ist.

4. Mehrachsige Verbundlaminatstruktur (100) nach Anspruch 1, wobei die jeweiligen ersten und zweiten Abschnitte (117, 114) der ersten bidirektionalen Schicht (112) und/oder die jeweiligen ersten und zweiten Abschnitte (119, 120) der zweiten bidirektionalen Schicht (118) eine gewebte bidirektionale Schicht aufweisen.

5. Mehrachsige Verbundlaminatstruktur (100) nach Anspruch 2, wobei zumindest eine der unidirektionalen Schichten des Weiteren eine erste unidirektionale Schicht mit einer Vielzahl von Verstärkungsfasern, die in der ersten ausgewählten Richtung orientiert sind, und eine zweite unidirektionale Schicht mit einer Vielzahl von parallelen Verstärkungsfasern aufweist, die in einer zweiten ausgewählten Richtung orientiert sind, wobei die erste ausgewählte Richtung ungefähr senkrecht zur ersten ausgewählten Richtung ist.

6. Mehrachsige Verbundlaminatstruktur (100) nach Anspruch 5, wobei die erste unidirektionale Schicht (116) und die zweite unidirektionale Schicht (110) des Weiteren eine gewebte Verstärkungsschicht aufweisen.

7. Mehrachsige Verbundlaminatstruktur (100) nach Anspruch 1, wobei die erste bidirektionale Schicht (112) zumindest ungefähr 60 Prozent eines Volumens der Struktur (100) aufweist.

8. Mehrachsige Verbundlaminatstruktur (100) nach Anspruch 1, wobei die erste bidirektionale Schicht (112) 80 Prozent eines Volumens der Struktur aufweist.

9. Raumfahrzeug, das aufweist:
einen Rumpf;
Flügelanordnungen und ein Leitwerk, die betrieblich an den Rumpf gekoppelt sind; und
eine mehrachsige Verbundlaminatstruktur (100) nach einem der vorhergehenden Ansprüche, wobei die Struktur (100) in einen ausgewählten Abschnitt des Rumpfs, der Flügelanordnungen und/oder des Leitwerks integriert ist.

## Revendications

1. Structure stratifiée composite multiaxiale (100), comprenant:
une première couche unidirectionnelle (116) comprenant une pluralité de fibres de renforcement parallèles (111) qui sont alignées avec une première direction sélectionnée (113), la première direction sélectionnée étant alignée avec une direction de contrainte principale;
une seconde couche unidirectionnelle (110) comprenant une pluralité de fibres de renforcement parallèles (111) qui sont alignées avec une seconde direction sélectionnée (115), dans laquelle la première direction sélectionnée (113) et la seconde direction sélectionnée (115) sont perpendiculaires;
une première couche bidirectionnelle (112) positionnée sur un premier côté de la première couche unidirectionnelle (116) et présentant une première partie plane (117) comprenant une pluralité de fibres de renforcement parallèles (111) orientées selon un premier angle étroit α sélectionné par rapport à une première direction sélectionnée (113) et une seconde partie plane adjacente (114) comprenant des fibres de renforcement approximativement parallèles (111) orientées selon un deuxième angle étroit -α sélectionné par rapport à la première direction (113);
une seconde couche bidirectionnelle (118) positionnée sur un côté opposé de la première couche unidirectionnelle (116) et présentant une première partie plane (119) comprenant une pluralité de fibres de renforcement parallèles (111) orientées selon un troisième angle large β sélectionné par rapport à la première direction sélectionnée (113) et une seconde partie plane adjacente (120) comprenant des fibres de renforcement approximativement parallèles (111) orientées selon un quatrième angle large -β sélectionné par rapport à la première direction (113),
dans laquelle une des relations suivantes s'applique pour l'angle α: 1°<α<3°; 3°<α<7°; 7°<α≤15°, et pour l'angle β la relation suivante est valide: 45°<β<90°.

2. Structure stratifiée composite multiaxiale selon la revendication 1, comprenant en outre au moins une des couches unidirectionnelles (116, 117) couplée à au moins une parmi la première couche bidirectionnelle (112) et la seconde couche bidirectionnelle (118).

3. Structure stratifiée composite multiaxiale (100) selon la revendication 2, dans laquelle la première couche unidirectionnelle (116) est intercalée entre la première couche bidirectionnelle (112) et la seconde couche bidirectionnelle (118).

4. Structure stratifiée composite multiaxiale (100) selon la revendication 1, dans laquelle au moins une des première et seconde parties respectives (117, 114) de la première couche bidirectionnelle (112), et des première et seconde parties respectives (119, 120) de la seconde couche bidirectionnelle (118) comprend une couche bidirectionnelle tissée.

5. Structure stratifiée composite multiaxiale (100) selon la revendication 2, dans laquelle au moins une des couches unidirectionnelles comprend en outre une première couche unidirectionnelle présentant une pluralité de fibres de renforcement orientées dans la première direction sélectionnée, et une seconde couche unidirectionnelle présentant une pluralité de fibres de renforcement parallèles orientées dans une seconde direction sélectionnée, la seconde direction sélectionnée étant approximativement perpendiculaire à la première direction sélectionnée.

6. Structure stratifiée composite multiaxiale (100) selon la revendication 5, dans laquelle la première couche unidirectionnelle (116) et la seconde couche unidirectionnelle (110) comprennent en outre une couche de renforcement tissée.

7. Structure stratifiée composite multiaxiale (100) selon la revendication 1, dans laquelle la première couche bidirectionnelle (112) comprend au moins 60 pour cent d'un volume de la structure (100).

8. Structure stratifiée composite multiaxiale (100) selon la revendication 1, dans laquelle la première couche bidirectionnelle (112) comprend 80 pour cent d'un volume de la structure.

9. Véhicule aérospatial, comprenant:
un fuselage;
des ensembles d'aile et un empennage couplés de façon opérationnelle au fuselage; et
une structure stratifiée composite multiaxiale (100) selon l'une des revendications précédentes, ladite structure (100) étant incorporée dans une partie sélectionnée d'au moins un composant parmi le fuselage, les ensemble d'aile et l'empennage.
